(19) Europäisches Patentamt / European Patent Office / Office européen des brevets

(11) **EP 3 593 483 B1**

(12) # EUROPÄISCHE PATENTSCHRIFT

(45) Veröffentlichungstag und Bekanntmachung des Hinweises auf die Patenterteilung:
**28.04.2021 Patentblatt 2021/17**

(21) Anmeldenummer: **18709467.7**

(22) Anmeldetag: **28.02.2018**

(51) Int Cl.:
*H04L 9/00* (2006.01)   *G06F 7/575* (2006.01)

(86) Internationale Anmeldenummer:
**PCT/EP2018/000081**

(87) Internationale Veröffentlichungsnummer:
**WO 2018/162115 (13.09.2018 Gazette 2018/37)**

(54) **ÜBERGANG VON EINER BOOLESCHEN MASKIERUNG ZU EINER ARITHMETISCHEN MASKIERUNG**

TRANSITION FROM A BOOLEAN MASKING TO AN ARITHMETIC MASKING

TRANSITION D'UN MASQUAGE BOOLÉEN À UN MASQUAGE ARITHMÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2017 DE 102017002153**

(43) Veröffentlichungstag der Anmeldung:
**15.01.2020 Patentblatt 2020/03**

(73) Patentinhaber: **Giesecke+Devrient Mobile Security GmbH**
**81677 München (DE)**

(72) Erfinder:
 • **PULKUS, Jürgen**
  **80469 München (DE)**
 • **HOFFMANN, Lars**
  **80639 München (DE)**

(56) Entgegenhaltungen:
**EP-B1- 1 596 527**

 • MICHAEL HUTTER ET AL: "Constant-Time Higher-Order Boolean-to-Arithmetic Masking", INTERNATIONAL ASSOCIATION FOR CRYPTOLOGIC RESEARCH,, Bd. 20161222:183711, 22. Dezember 2016 (2016-12-22), Seiten 1-22, XP061022331, [gefunden am 2016-12-22]

 • VADNALA PRAVEEN KUMAR ET AL: "Algorithms for Switching between Boolean and Arithmetic Masking of Second Order", 19. Oktober 2013 (2013-10-19), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047041146, ISSN: 0302-9743 ISBN: 978-3-642-38287-1 Seiten 101-102

 • CORON JEAN-SÉBASTIEN ET AL: "Secure Conversion between Boolean and Arithmetic Masking of Any Order", 23. September 2014 (2014-09-23), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047299331, ISSN: 0302-9743 ISBN: 978-3-642-38287-1 Seiten 195-201

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft allgemein das Gebiet der Kryptographie und spezieller das Gebiet des Ausspähungsschutzes von kryptographischen Berechnungen. Insbesondere betrifft die Erfindung den Übergang von einer ersten Maskierung eines geheim zu haltenden Wertes, die auf einer booleschen Maskierungsregel beruht, zu einer zweiten Maskierung des geheim zu haltenden Wertes, die auf einer additiven Maskierungsregel beruht. Besonders eignet sich die Erfindung zur Verwendung in einem tragbaren Datenträger. Ein solcher tragbarer Datenträger kann beispielsweise als Chipkarte (*smart card*) oder als einsteckbares Chipmodul oder als fest in ein tragbares Gerät eingebautes Chipmodul oder als tragbares ressourcenbeschränktes System ausgestaltet sein.

Tragbare Datenträger werden oft für sicherheitskritische Anwendungen eingesetzt, beispielsweise zur Authentisierung im Mobilfunk, als GeldKarte, als Signaturkarte oder Signaturtoken zur elektronischen Unterschrift und so weiter. Da durch eine unbefugte Verwendung hoher Schaden entstehen könnte, müssen die auf solchen Datenträgern gespeicherten, geheimen Daten zuverlässig vor Ausspähung und Manipulation geschützt werden.

Eine an sich bekannte Art von Angriffsverfahren zur Datenausspähung sind sogenannte Seitenkanalangriffe, bei denen durch Messungen während der Programmausführung Rückschlüsse auf die verarbeiteten Daten gezogen werden können. So können z.B. die Stromaufnahme des Datenträgers und/ oder andere physikalische Parameter wie z.B. elektromagnetische Abstrahlungen oder Programmlaufzeiten gemessen und ausgewertet werden. Es werden entweder die gemessenen Eigenschaften während eines einzigen Berechnungsablaufs untersucht (z.B. SPA = *Simple Power Analysis*), oder es werden viele Berechnungsabläufe beobachtet und statistisch ausgewertet (z.B. DPA = *Differential Power Analysis*).

Allgemein wird zwischen Seitenkanalangriffen erster, zweiter, dritter, etc. Ordnung unterschieden. Bei einem Seitenkanalangriff erster Ordnung vermag der Angreifer einen einzigen während der Berechnung auftretenden Wert zu ermitteln, also z.B. den Wert, der sich zu einem bestimmten Zeitpunkt in einem bestimmten Register eines Prozessors des Datenträgers befindet. Bei einem Seitenkanalangriff zweiter Ordnung vermag der Angreifer zwei solcher Werte zu ermitteln, also z.B. den Inhalt eines Prozessorregisters zu zwei verschiedenen Zeitpunkten, oder den Inhalt zweier Register zu einem Zeitpunkt. Entsprechend werden durch einen Seitenkanalangriff dritter Ordnung drei Werte ausgespäht, und so weiter.

Zur Abwehr von Seitenkanalangriffen ist eine softwaremäßige Schutzmaßnahme bekannt, die darin besteht, geheim zu haltende Daten vor der Ausführung von kryptographischen Berechnungen zu maskieren, also mit einem als Maske bezeichneten Wert zu verfälschen. Die Maske wird vor jeder Ausführung der kryptographischen Berechnung - oder auch zu anderen Zeitpunkten - als zufälliger Wert gewählt. Die kryptographische Berechnung wird dann nicht mit den geheim zu haltenden Daten, sondern mit deren maskierter Repräsentation durchgeführt. Selbst wenn es einem Angreifer gelingt, durch einen Seitenkanalangriff erster Ordnung die maskierte Repräsentation zu ermitteln, so können daraus wegen der Maskierung keine Rückschlüsse auf die geheim zu haltenden Daten gezogen werden.

Eine Maskierung eines geheim zu haltenden Wertes kann auf unterschiedlichen Maskierungsregeln beruhen. Die Maskierungsregel gibt die Rechenvorschrift an, gemäß der die zu schützenden Daten mit der Maske verknüpft werden, um die maskierte Repräsentation zu erhalten. Welche Maskierungsregel geeignet ist, hängt von der Art der kryptographischen Berechnung ab.

Wenn die kryptographische Berechnung im wesentlichen aus bitweisen Operationen besteht, ist als Maskierungsregel oft eine Exklusiv-Oder-Verknüpfung (xor-Verknüpfung; im vorliegenden Dokument auch durch das Operatorsymbol $\oplus$ bezeichnet) geeignet. Aus einem geheim zu haltenden Wert $d$ wird also eine maskierte Repräsentation $x$ mit $x = d \oplus s$ abgeleitet, wobei s die zufällig gewählte Maske ist. Eine solche Maskierungsregel und auch verwandte Maskierungsregeln, die z.B. zusätzliche Invertierungen einzelner Bits aufweisen, werden im vorliegenden Dokument als boolesche Maskierungsregeln bezeichnet, und die verwendeten Masken werden als boolesche Masken bezeichnet.

Wenn die kryptographische Berechnung dagegen im wesentlichen aus byte-oder wortweisen Additionen oder vergleichbaren Operationen besteht, ist als Maskierungsregel oft eine Addition oder Subtraktion sinnvoll. Statt des geheim zu haltenden Wertes $d$ wird also z.B. eine maskierte Repräsentation x mit einer der Maskierungsregeln $x = d + r$ mod $2^n$ oder $x = d - r$ mod $2^n$ oder $x = r - d$ mod $2^n$ oder $x = -(d + r)$ mod $2^n$ verarbeitet, wobei $n$ die Bitbreite ist, mit der die Berechnungen ausgeführt werden. Im vorliegenden Dokument werden solche Maskierungsregeln und auch verwandte Maskierungsregeln, bei denen z.B. noch eine Multiplikation mit einem konstanten Faktor stattfindet, als additive Maskierungsregeln bezeichnet, und zwar unabhängig davon, ob bei der Maskierung eine Addition oder eine Subtraktion ausgeführt wird. Dies entspricht der üblichen Terminologie, gemäß der sowohl die Addition als auch die Subtraktion als additive Operationen angesehen werden. Entsprechend werden die verwendeten Masken als additive Masken bezeichnet.

Bei fehlerfreier Implementierung verhindern die gerade genannten booleschen und additiven Maskierungsregeln Seitenkanalangriffe erster Ordnung. Gegen Seitenkanalangriffe zweiter Ordnung bieten diese Regeln jedoch keinen Schutz, weil z.B. bei der booleschen Maskierungsregel ein Angreifer, der die Werte x und s ausspäht, daraus den geheim zu haltenden Wert $d$ ermitteln kann. Nach einem zumindest internen Stand der Technik der Anmelderin kann jedoch Schutz gegen Seitenkanalangriffe zweiter Ordnung erzielt werden, indem eine Maskierung mit zwei zufällig gewählten Masken erfolgt. So ist z.B. eine boolesche Maskierung mit zwei zufällig gewählten Masken $s_1$, $s_2$ und der Maskierungs-regel $x = d \oplus s_1 \oplus s_2$ gegen Seitenkanalangriffe zweiter Ordnung sicher. Dasselbe gilt für eine additive Maskierung mit zwei zufällig gewählten Masken $r_1$, $r_2$ und einer Maskierungsregel der Form $x = \pm d \pm r_1 \pm r_2 \mod 2^n$, also beispielsweise $x = d + r_1 + r_2 \mod 2^n$.

Unabhängig von der Anzahl der Masken und der "Stärke" des erzielten Schutzes ergibt sich eine Schwierigkeit, wenn bei der kryptographischen Berechnung nacheinander Operationen ausgeführt werden, die nur mit unterschiedlichen Maskierungsregeln verträglich sind. Das ist beispielsweise bei symmetrischen Verschlüsselungsverfahren wie IDEA (*International Data Encryption Algorithm*), SAFER K-64 und RC5 sowie Hash-Algorithmen wie MD5 oder SHA-1 der Fall. Für manche Abschnitte dieser Algorithmen bietet sich eine boolesche Maskierung an, während in anderen Abschnitten eine additive Maskierung vorteilhafter ist.

An den Schnittstellen zwischen diesen Abschnitten ist es daher erforderlich, einen Übergang von einer Art der Maskierung in die andere zu schaffen. Auch hierbei ist darauf zu achten, daß ein Angreifer keine verwertbaren Informationen über den zu schützenden Wert erhalten kann. Daher verbietet sich z.B. die Vorgehensweise, bei einer Maskierung mit einer booleschen Maske $s$ zunächst den geheim zu haltenden Wert $d$ aus der maskierten Repräsentation $x$ durch eine xor-Verknüpfung mit der booleschen Maske $s$ zu bestimmen und dann unter Verwendung des Wertes $d$ und einer additiven Maske $r$ die neue maskierte Repräsentation zu berechnen.

Aus der Patentschrift EP 1 596 527 B1 ist ein Verfahren zum Maskierungsübergang von einer booleschen Maskierung eines geheim zu haltenden Wertes zu einer additiven Maskierung des geheim zu haltenden Wertes bekannt. Dieses Verfahren hat sich in der Praxis als sehr hilfreich erwiesen; es ist jedoch nur gegen Seitenkanalangriffe erster Ordnung geschützt.

In dem Artikel ″A Sound Method for Switching between Boolean and Arithmetic Masking″ von L. Goubin, erschienen in dem Tagungsband zum "Workshop on Cryptographic Hardware and Embedded Systems 2001 (CHES 2001)", Band 2162 der Lecture Notes in Computer Science, Springer-Verlag, 2001, Seiten 3-15, sind Verfahren zum Maskierungsübergang beschrieben, die gegen Seitenkanalangriffe erster Ordnung geschützt sind. Bei diesen Verfahren wird eine neue maskierte Repräsentation des geheim zu haltenden Werten ohne Veränderung der Maske berechnet. Diese Verfahren sind auch in der Offenlegungsschrift WO 02/065692 A1 offenbart.

Der Artikel ″Efficient and Provably Secure Methods for Switching from Arithmetic to Boolean Masking″ von Blandine Debraize, erschienen in dem Tagungsband zum "Workshop on Cryptographic Hardware and Embedded Systems 2012 (CHES 2012)", Band 7428 der Lecture Notes in Computer Science, Springer-Verlag, 2012, Seiten 107-121, beschreibt ein weiteres ausspähungsgeschütztes Ver-fahren zum Maskierungsübergang, das als sicher gegen Seitenkanalangriffe erster Ordnung und als besonders effizient bezeichnet wird.

Im Aufsatz von Michael Hutter et al: "Constant-Time Higher-Order Boolean-to-Arithmetic Masking", International Association For Cryptologic Research, Bd. 20161222:183711,22. Dezember 2016 (2016-12-22), Seiten 1-22, XP061022331, wird ein Verfahren zum Übergang von einer booleschen Maskierung eines geheim zu haltenden Wertes zu einer additiven Maskierung des geheim zu haltenden Wertes beschrieben. Es werden zwei boolesche und zwei arithmetische Masken eingesetzt. Diese Maskierung dient zum Schutz bei kryptographischen Berechnungen vor Seitenkanalangriffen zweiter Ordnung.

Eine Sicherung gegen Seitenkanalangriffe erster Ordnung stellt bereits einen wichtigen Vorteil dar. Es wird jedoch in jüngster Zeit zunehmend wichtiger, auch Schutz gegen Seitenkanalangriffe zweiter Ordnung zu bieten. Dies ist z.B. eine Forderung gewisser Sicherheitsstufen der *Common Criteria for Information Technology Security Evaluation* (Allgemeine Kriterien für die Bewertung der Sicherheit von Informationstechnologie) gemäß der Norm ISO/IEC 15408, und auch bei EMVCo-Evaluationen. Es wäre daher wünschenswert, ein Maskierungsübergangsverfahren bereitzustellen, das einen im Vergleich zu bekannten Verfahren gesteigerten Schutz gegen Seitenkanal-angriffe aufweist. Ferner wäre es wünschenswert, wenn sich das Verfahren trotz der hohen gebotenen Sicherheit effizient implementieren ließe.

Die Erfindung hat die Aufgabe, eine vorteilhafte Technik zum ausspähungsgeschützten Übergang von einer booleschen Maskierung eines geheim zu haltenden Wertes zu einer additiven Maskierung des geheim zu haltenden Wertes zu schaffen, die gegen Seitenkanalangriffe zweiter Ordnung geschützt ist.

Erfindungsgemäß wird diese Aufgabe ganz oder zum Teil gelöst durch ein Verfahren mit den Merkmalen des Anspruchs 1, ein Computerprogrammprodukt gemäß Anspruch 14 und eine Vorrichtung, insbesondere einen tragbaren Datenträger oder ein Chipmodul, gemäß Anspruch 15. Die abhängigen Ansprüche betreffen optionale Merkmale einiger Ausführungsformen der Erfindung.

Die Erfindung geht von der Grundüberlegung aus, den Maskierungsübergang in Form von insgesamt drei einfacheren Maskierungsübergängen auszuführen. Diese Maskierungsübergänge werden in der Beschreibung und den Ansprüchen als "erster", "zweiter" und "dritter" Maskierungsübergang bezeichnet. Dies dient aber lediglich der verständlicheren Darstellung und soll keine Ausführungsreihenfolge implizieren. Je nach der Implementierung und der Reihenfolge, in der gewisse Zwischenergebnisse erzeugt und benötigt werden, sind auch andere Reihenfolgen der Maskierungsübergänge, und/ oder eine ganz oder teilweise parallele oder ganz oder teilweise ineinander verzahnte Ausführung, möglich und vorgesehen.

Das erfindungsgemäße Verfahren ist unter anderem dadurch gegen Seitenkanalangriffe zweiter Ordnung gesichert, dass das Ergebnis des ersten Maskierungsübergangs, nämlich die erste additive Maske, ihrerseits eine maskierte Repräsentation ist, in der ein als boolesche Maske dienender Verschleierungswert verwendet wird. Dieser Verschleierungswert wird in dem zweiten Maskierungsübergang in einen additiven Korrekturwert umgewandelt. In dem dritten Maskierungsübergang wird die zweite additive Maske bestimmt. Der Korrekturwert kann in manchen Ausführungsformen in die zweite Maske einfließen, in weiteren Ausführungsformen separat zur zweiten Maske ausgegeben werden, und in noch weiteren Ausführungsformen auf andere Weise verwendet werden.

In manchen Ausgestaltungen werden der als boolesche Maske dienende Verschleierungswert und/oder weitere Verschleierungswerte zufällig bestimmt. Beispielsweise können für einen Verfahrensablauf insgesamt drei zufällige Verschleierungswerte vorgesehen sein. Die drei Maskierungsübergänge werden in manchen Ausführungsformen mit drei unterschiedlichen Basiswerten ausgeführt, von denen z.B. einer der geheim zu haltende Wert sein kann. Dies heißt natürlich nicht, dass dieser Wert im Klartext vorliegt (und damit ausspähungsgefährdet wäre), sondern es heißt nur, dass der Maskierungsübergang konzeptuell diesen Basiswert verwendet.

Insgesamt ist dient das Verfahren vorzugsweise zum Schutz gegen Seitenkanalangriffe zweiter Ordnung, auch wenn, wie dies in manchen Ausführungsformen vorgesehen ist, mindestens einer oder mindestens zwei der einfacheren Maskierungsübergänge (für sich betrachtet) nur gegen Seitenkanalangriffe erster Ordnung geschützt ist bzw. sind.

Vorzugsweise ist das Maskierungsübergangsverfahren zwischen zwei Abschnitte einer kryptographischen Berechnung eingebettet. In manchen Ausgestaltungen wird hierbei zunächst die maskierte Repräsentation durch eine mit der booleschen Maskierungsregel verträgliche Operation erzeugt oder verarbeitet, dann erfolgt der Maskierungsübergang, und schließlich wird die maskierte Repräsentation durch eine mit der additiven Maskierungsregel verträgliche Operation weiterverarbeitet.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine CD-ROM. Das Computerprogrammprodukt kann jedoch auch ein nicht-körperliches Medium sein, z.B. ein über ein Computernetzwerk übermitteltes Signal. Insbesondere kann das Computerprogrammprodukt Programmbefehle enthalten, die im Zuge der Herstellung oder der Initialisierung oder der Personalisierung eines tragbaren Datenträgers oder eines Chipmoduls in diesen bzw. dieses eingebracht werden.

Die erfindungsgemäße Vorrichtung kann insbesondere ein tragbarer Datenträger, z.B. eine Chipkarte oder ein Chipmodul, sein. Ein derartiger Datenträger enthält in an sich bekannter Weise mindestens einen Prozessor, mehrere in unterschiedlichen Technologien ausgestaltete Speicher und diverse Hilfsbaugruppen wie z.B. Schnittstellenschaltungen, Zeitgeber und Verbindungselemente.

In bevorzugten Weiterbildungen weisen das Computerprogrammprodukt und/oder die Vorrichtung Merkmale auf, die den in der vorliegenden Beschreibung erwähnten und/oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele, Ausführungsalternativen und beispielhafter Implementierungen. Es wird auf die schematische Zeichnung verwiesen.

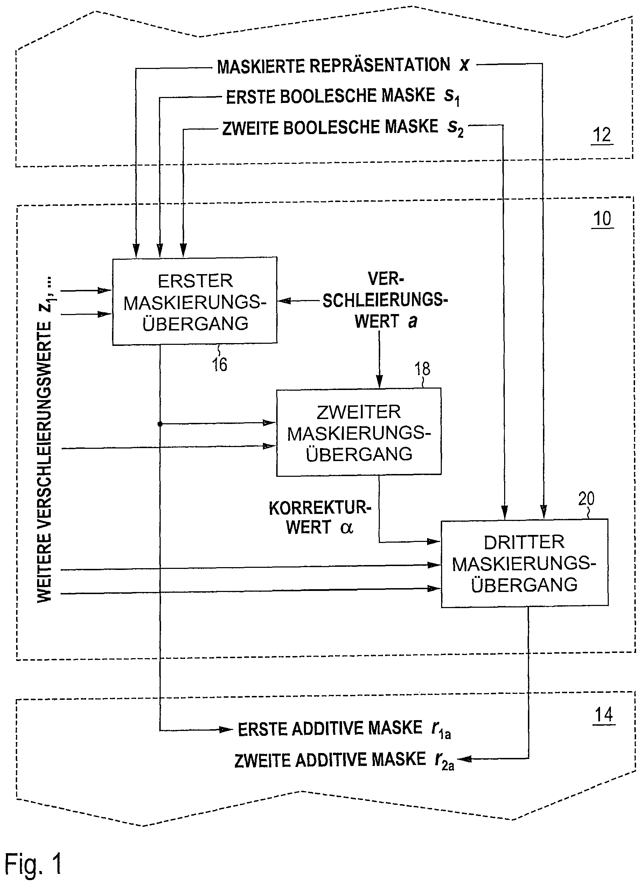

Fig. 1 als einzige Zeichnungsfigur zeigt ein Diagramm, in dem Operationen eines Ausführungsbeispiels der Erfindung und die von diesen Operationen genutzten und erzeugten Daten veranschaulicht sind.

In Fig. 1 ist ein Teil einer kryptographischen Berechnung, z.B. einer Hash-Funktion oder einer IDEA-Ver- oder Entschlüsselung, dargestellt. Ein Maskierungsübergangsverfahren 10 nach einem Ausführungsbeispiel der Erfindung ist zwischen einen ersten Abschnitt 12 und einen zweiten Abschnitt 14 der kryptographischen Berechnung eingebettet. Die im ersten Abschnitt 12 ausgeführten Operationen der kryptographischen Berechnung sind mit einer booleschen Maskierungsregel verträglich und werden unter Verwendung mehrerer boolescher Masken ausgeführt. Als Ergebnis des ersten Abschnitts 12 liegt eine maskierte Repräsentation $x$ eines geheim zu haltenden Wertes $d$ vor, die gemäß einer booleschen Maskierungsregel mit zwei booleschen Masken $s_1$, $s_2$ maskiert ist; es gilt also z.B. $x = d \oplus s_1 \oplus s_2$.

Der zweite Abschnitt 14 der kryptographischen Berechnung beinhaltet weitere Operationen, die jedoch nicht mit der booleschen Maskierungsregel, sondern nur mit einer additiven Maskierungsregel verträglich sind. Im vorliegenden Ausführungsbeispiel lautet die im zweiten Abschnitt 14 verwendete Maskierungsregel $x = d + r_{1a} + r_{2a} \mod 2^n$, wobei $r_{1a}$ und $r_{2a}$ je eine additive Maske sind und $n$ die Wortbreite der durchgeführten Berechnung in Bit angibt. Das Maskierungsübergangsverfahren 10 soll daher aus der ersten Maskierung des geheim zu haltenden Wertes $d$ mit den booleschen Masken $s_1$, $s_2$ eine zweite Maskierung bestimmen, die zwei additive Masken $r_{1a}$ und $r_{2a}$ aufweist. In der hier zunächst beschriebenen Ausgestaltung soll bei der Ausführung des Maskierungsübergangsverfahrens 10 die maskierte Repräsentation $x$ unverändert bleiben, während dies in anderen Ausgestaltungen, die später beschrieben werden, nicht der Fall ist.

Im hier beschriebenen Ausführungsbeispiel weist das Maskierungsübergangsverfahren 10 insgesamt drei einfachere Maskierungsübergänge 16, 18, 20 auf. Diese Maskierungsübergänge 16, 18, 20 werden hier auch als "erster", "zweiter" und "dritter" Maskierungsübergang bezeichnet. Dies dient jedoch lediglich der einfacheren Benennung, ohne dass hierdurch eine Ausführungsreihenfolge impliziert werden soll. In Ausführungsvarianten können die drei Maskierungsübergänge 16, 18, 20 in anderer Reihenfolge oder z.B. auch ineinander verzahnt ausgeführt werden, also z.B. zunächst ein Teil des dritten Maskierungsübergangs 20, der den Korrekturwert $\alpha$ nicht benötigt, und dann erst der zweite Maskierungsübergang 18.

Bevor die Maskierungsübergänge 16, 18, 20 im Detail beschrieben werden, werden zunächst zum besseren Verständnis zwei allgemeine Formeln erläutert, mit denen sich Maskierungsübergänge in einer gegen Seitenkanalangriffe erster Ordnung geschützten Weise ausführen lassen.

Es sei eine maskierte Repräsentation x eines geheim zu haltenden Basiswertes $d$ mit einer booleschen Maske s gegeben, so dass also $x = d \oplus s$ gilt. Berechnet werden soll eine arithmetische Maske $r$, mit der die maskierte Repräsentation x den geheim zu haltenden Basiswert $d$ darstellt, also für die $x = d + r \bmod 2^n$ bei gegebener Berechnungsbitbreite $n$ gilt. Um die Rechnung gegen einen Seitenkanalangriff erster Ordnung zu sichern, wird ein zufälliger Verschleierungswert z eingeführt. Die arithmetische Maske $r$ ergibt sich dann durch die Formel:

$$r = ((d \oplus s \oplus z) - (d \oplus z)) \oplus s \oplus ((s \oplus z) - z)$$

Diese Beziehung, die im folgenden als "XOR2ADD-Formel" bezeichnet wird, ist in leicht abgewandelter Form bereits aus EP 1 596 527 B1 bekannt. Die Korrektheit der XOR2ADD-Formel ergibt sich aus einer Betrachtung der vermöge $F(x, s) := (x - (x \oplus s)) \bmod 2^n$ definierten Funktion. Für die oben genannte maskierte Repräsentation x des geheim zu haltenden Basiswertes $d$ und die oben genannte boolesche Maske s stellt der Wert $F(x, s)$ die gesuchte additive Maske $r$ dar, weil $d + F(x, s) = d + (x - (x \oplus s)) = d + x - d = x$ gilt. Für die Abbildung $F(\_, s)$ gilt: $F(x \oplus y, s) = F(x, s) \oplus F(y, s) \oplus F(0, s)$. Somit ergibt sich die folgende Gleichungskette:

$$
\begin{aligned}
r &= F(x, s) \\
&= F((x \oplus z) \oplus (z \oplus s) \oplus s, s) \\
&= F(x \oplus z, s) \oplus F(z \oplus s, s) \oplus F(s, s) \\
&= ((x \oplus z) - (x \oplus z \oplus s)) \oplus ((z \oplus s) - z) \oplus s
\end{aligned}
$$

Die XOR2ADD-Formel folgt, indem in der gerade abgeleiteten Beziehung für r der Wert x durch $d \oplus s$ ersetzt wird.

Die oben genannte XOR2ADD-Formel lässt sich dadurch erweitern, dass nicht nur ein zufälliger Verschleierungswert z, sondern zwei Verschleierungswerte $z_1$ und $z_2$ herangezogen werden. Je nach den Sicherheitsanforderungen können die Verschleierungswerte $z_1$, $z_2$ jeder für sich zufällig sein, oder es können gewisse Abhängigkeiten entweder zwischen den Verschleierungswerten $z_1$, $z_2$ untereinander oder zwischen einem der Verschleierungswerte $z_1$, $z_2$ und einem anderen Wert bestehen. Unter Verwendung der beiden Verschleierungswerte $z_1$, $z_2$ ergibt sich die arithmetische Maske $r$ dann durch die folgende Beziehung, die hier als "erweiterte XOR2ADD-Formel" bezeichnet wird:

$$r = ((d \oplus s \oplus z_1 \oplus z_2) - (d \oplus z_1 \oplus z_2)) \oplus ((s \oplus z_1) - z_1) \oplus ((s \oplus z_2) - z_2)$$

Wie bereits oben kurz erläutert, geht das Maskierungsübergangsverfahren 10 in dem in Fig. 1 gezeigten Ausführungsbeispiel von einem geheim zu haltenden Basiswert $d$ aus, der in einer ersten Maskierung in Form einer mit zwei booleschen Masken $s_1$, $s_2$ gemäß einer booleschen Maskierungsregel maskierten Repräsentation x vorliegt; es gilt also $x = d \oplus s_1 \oplus s_2$. Gemäß dem vorliegenden Ausführungsbeispiel werden zwei additive Masken $r_{1a}$, $r_{2a}$ bestimmt, so dass $x = d + r_{1a} + r_{2a} \bmod 2^n$ gilt. Mit anderen Worten wird eine zweite Maskierung des geheim zu haltenden Basiswertes $d$ ermittelt, in der die maskierte Repräsentation x auch eine maskierte Repräsentation gemäß einer additiven Maskierungsregel mit den Masken $r_{1a}$, $r_{2a}$ ist. Das in Fig. 1 gezeigte Maskierungsübergangsverfahren 10 nutzt hierzu einen Maskierungsübergang gemäß der XOR2ADD-Formel und zwei Maskierungsübergänge gemäß der erweiterten XOR2ADD-Formel. Das Maskierungsübergangsverfahren 10 ist gegen Seitenkanalangriffe zweiter Ordnung geschützt; es sind also selbst bei Kenntnis von zwei Zwischenergebnissen keine Informationen über den geheim zu haltenden Wert $d$ ableitbar.

In einem Versuchsansatz, der nun zunächst als Hinführung zum Ausführungsbeispiel beschrieben wird, würde man zwei additive Masken $r_1$, $r_2$ mit $x = d + r_1 + r_2$ dadurch bestimmen, dass zunächst ein "innerer" Maskierungsübergang von $d \oplus s_1$ nach $d + r_1$ und dann ein "äußerer" Maskierungsübergang von $(d + r_1) \oplus s_2$ nach $(d + r_1) + r_2$ durchgeführt wird. Jeder dieser beiden Maskierungsübergänge erfolgt gemäß dem Versuchsansatz nach der erweiterten XOR2ADD-Formel mit geeigneten Verschleierungswerten. So ergibt sich gemäß dem Versuchsansatz der Wert $r_1$ mit zwei Verschleierungswerten $z_1$, $z_2$ aus der folgenden Beziehung, die mit "(A0)" bezeichnet wird:

$$r_1 = ((d \oplus s_1 \oplus z_1 \oplus z_2) - (d \oplus z_1 \oplus z_2)) \oplus ((s_1 \oplus z_1) - z_1) \oplus ((s_1 \oplus z_2) - z_2)$$

Bei der Analyse des gerade beschriebenen Versuchsansatzes haben die Erfinder jedoch die überraschende Erkenntnis gewonnen, dass die Berechnung von $r_1$ gemäß der Beziehung (A0) gegen Seitenkanalangriffe zweiter Ordnung anfällig ist, weil ein Angreifer aus der Kenntnis von $r_1$ und $s_1$ Rückschlüsse auf den geheim zu haltenden Wert $d$ ziehen könnte. In dem nun beschriebenen Ausführungsbeispiel wird daher der Versuchsansatz insofern abgewandelt, als bei dem ersten Maskierungsübergang 16 nicht die der booleschen Maske $s_1$ entsprechende additive Maske $r_1$ bestimmt wird, sondern stattdessen ein gegenüber $r_1$ abgewandelter Wert $r_{1a}$. Der Wert $r_{1a}$, der die insgesamt gesuchte erste Maske darstellt, ist die boolesche Maskierung des Wertes $r_1$ mit einer weiteren booleschen Maske, nämlich einem zufällig gewählten Verschleierungswert $a$. Es gilt somit $r_{1a} = r_1 \oplus a$, woraus sich durch Einsetzen der obigen Beziehung (A0) die folgende Beziehung (A1) ergibt:

$$r_{1a} = ((d \oplus s_1 \oplus z_1 \oplus z_2) - (d \oplus z_1 \oplus z_2)) \oplus ((s_1 \oplus z_1) - z_1) \oplus ((s_1 \oplus z_2) - z_2) \oplus a$$

Da in der Gleichung $x = d \oplus s_1 \oplus s_2$ die Exklusiv-Oder-Operationen beliebig von der rechten auf die linke Seite verschoben werden können, kann die Beziehung (A1) auch wie folgt als Beziehung (A2) geschrieben werden:

$$r_{1a} = ((x \oplus s_2 \oplus z_1 \oplus z_2) - (x \oplus s_1 \oplus s_2 \oplus z_1 \oplus z_2))$$
$$\oplus ((s_1 \oplus z_1) - z_1) \oplus ((s_1 \oplus z_2) - z_2) \oplus a$$

Die Beziehung (A2) stellt den ersten Maskierungsübergang 16 gemäß dem hier beschriebenen Ausführungsbeispiel dar. Bei geeigneter Implementierung ist die Berechnung der Beziehung (A2) gegen Seitenkanalangriffe zweiter Ordnung sicher.

Weil gemäß (A2) der Wert $r_{1a}$ statt des eigentlich gewünschten Wertes $r_1$ berechnet wurde, ist im hier beschriebenen Ausführungsbeispiel noch ein Korrekturschritt erforderlich, für den der boolesche Verschleierungswert $a$ in einen entsprechenden additiven Korrekturwert $\alpha$ umgewandelt wird. Wie bereits erwähnt, stellt der Wert a die Maske gemäß einer booleschen Maskierung $r_{1a} = r_1 \oplus a$ des Wertes $r_1$ dar. In dem Korrekturschritt wird daher die boolesche Maske $a$ mit dem Basiswert $r_1$ in eine entsprechende additive Maske $\alpha$ umgewandelt, für die somit $r_{1a} = r_1 + \alpha$ gilt. Hierzu werden die nicht-erweiterte XOR2ADD-Formel und ein weiterer zufälliger Verschleierungswert $z_3$ verwendet, so dass sich die folgende Beziehung (B) ergibt:

$$\alpha = ((r_1 \oplus a \oplus z_3) - (r_1 \oplus z_3)) \oplus a \oplus ((a \oplus z_3) - z_3)$$

Die Beziehung (B) stellt im hier beschriebenen Ausführungsbeispiel den zweiten Maskierungsübergang 18 dar. Der Wert $r_1$ muss für die Berechnung von $\alpha$ nicht explizit herangezogen werden, sondern die Kenntnis der Werte $r_{1a} = r_1 \oplus a$ und $a$ reicht aus.

Es ist nun noch ein weiterer Maskierungsübergang erforderlich, der im vorliegenden Ausführungsbeispiel auf dem "äußeren" Maskierungsübergang des oben beschriebenen Versuchsansatzes von $(d + r_1) \oplus s_2$ zu $(d + r_1) + r_2$ beruht. Hierfür werden die erweiterte XOR2ADD-Formel und zwei weitere Verschleierungswerte $z_4$, $z_5$ herangezogen, so dass sich die folgende mit "(C0)" bezeichnete Beziehung ergibt:

$$r_2 = (((d + r_1) \oplus s_2 \oplus z_4 \oplus z_5) - ((d + r_1) \oplus z_4 \oplus z_5))$$
$$\oplus ((s_2 \oplus z_4) - z_4) \oplus ((s_2 \oplus z_5) - z_5)$$

Da $x = (d + r_1) \oplus s_2$ gilt, lässt sich die Beziehung (C1) auch wie folgt als Beziehung (C2) schreiben:

$$r_2 = ((x \oplus z_4 \oplus z_5) - (x \oplus s_2 \oplus z_4 \oplus z_5)) \oplus ((s_2 \oplus z_4) - z_4) \oplus ((s_2 \oplus z_5) - z_5)$$

Durch die Verwendung der beiden Verschleierungswerte $z_4$ und $z_5$ sind keine weiteren Schutzmaßnahmen gegen Seitenkanalangriffe zweiter Ordnung erforderlich. Das Ergebnis $r_2$ ist jedoch noch nicht die gewünschte zweite additive Maske $r_{2a}$, da sich durch die Verwendung des Verschleierungswerts $a$ die erste additive Maske $r_{1a}$ gegenüber $r_1$ um den Wert $\alpha$ vergrößert hat. Dieser Korrekturwert $\alpha$ muss nun noch vom Ergebnis $r_2$ abgezogen werden, so dass sich die zweite additive Maske $r_{2a}$ mit $r_{2a} = r_2 - \alpha$ ergibt. Insgesamt wird somit die zweite Maske $r_{2a}$ durch die folgende Beziehung (C3) bestimmt:

$$r_{2a} = r_2 - \alpha$$
$$= (((x \oplus z_4 \oplus z_5) - (x \oplus s_2 \oplus z_4 \oplus z_5)) \oplus ((s_2 \oplus z_4) - z_4) \oplus ((s_2 \oplus z_5) - z_5)) - \alpha$$

Die Beziehung (C3) stellt im hier beschriebenen Ausführungsbeispiel den dritten Maskierungsübergang 20 dar.
Insgesamt bilden die beiden so erhaltenen additiven Masken $r_{1a}$ (gemäß Beziehung (A2)) und $r_{2a}$ (gemäß Beziehung (C3)) das gewünschte Ergebnis der Maskierungsübergangsverfahrens 10, denn es gilt:

$$x = d + r_1 + r_2 = d + (r_{1a} - \alpha) + (r_{2a} + \alpha) = d + r_{1a} + r_{2a}$$

Es versteht sich, dass in Ausführungsalternativen diverse Abwandlungen des gerade beschriebenen Ausführungsbeispiels möglich sind. So kann beispielsweise das Verfahren dahingehend abgewandelt werden, dass nicht der korrigierte Wert $r_{2a}$ als zweite Maske ausgegeben wird, sondern stattdessen der nicht-korrigierte *Wert* $r_2$ und getrennt davon der Korrekturwert $\alpha$.
Ferner werden im oben beschriebenen Ausführungsbeispiel neben dem Verschleierungswert $a$ fünf weitere Verschleierungswerte $z_1$, $z_2$, $z_3$, $z_4$, $z_5$ eingesetzt. In einer einfachen aber nicht sonderlich effizienten Implementierung können für diese Werte voneinander unabhängige Zufallszahlen verwendet werden. Aus Optimierungsgründen sind aber auch Implementierungen vorgesehen, bei denen die Verschleierungswerte von weniger Zufallszahlen abgeleitet werden. Hierbei muss natürlich darauf geachtet werden, den Ausspähungsschutz des Verfahrens nicht zu beeinträchtigen. Wie aus den beiden folgenden Beispielsimplementierungen hervorgeht, ist es jedoch ohne Abstriche beim Ausspähungsschutz möglich, die Anzahl der voneinander unabhängigen Zufallszahlen für das Maskierungsübergangsverfahren 10 auf drei zu reduzieren.
Wie bereits erwähnt, sind ferner diverse Abwandlungen des Maskierungsübergangsverfahrens 10 vorgesehen, bei den die Maskierungsübergänge 16, 18 und 20 - oder Teile davon - in anderer Reihenfolge als oben beschrieben ausgeführt werden.
Im folgenden werden zwei weitere Ausführungsbeispiele des Maskierungsübergangsverfahrens anhand zweier beispielhafter Implementierungen dargestellt. Zur Vermeidung von Missverständnissen wird angemerkt, dass sich die im folgenden verwendeten Namenskonventionen von denen des oben beschriebenen Ausführungsbeispiels unterscheiden.
Die erste beispielhafte Implementierung geht von den Eingangswerten x, y und z aus, wobei y und z boolesche Masken sind und x eine maskierte Repräsentation eines geheim zu haltenden Basiswertes d (der seinerseits nicht als Eingangswert zur Verfügung steht) ist. Somit gilt $x = d \oplus y \oplus z$. Es werden dann die folgenden Verfahrensschritte ausgeführt:

| | | | |
|---|---|---|---|
| Wähle zufällige Verschleierungswerte r, s und a | | | (Schritt 1) |
| t | $\leftarrow$ | $s \oplus r$ | (Schritt 2) |
| zs | $\leftarrow$ | $z \oplus s$ | (Schritt 3) |
| xr | $\leftarrow$ | $x \oplus r$ | (Schritt 4) |
| ztxr | $\leftarrow$ | $zs \oplus x$ | (Schritt 5) |
| ztyr | $\leftarrow$ | $zs \oplus y$ | (Schritt 6) |
| s11 | $\leftarrow$ | $ztxr - x$ | (Schritt 7) |
| s12 | $\leftarrow$ | $ztyr - y$ | (Schritt 8) |
| s13 | $\leftarrow$ | $s - z$ | (Schritt 9) |
| ra | $\leftarrow$ | $r \oplus a$ | (Schritt 10) |
| s11ra | $\leftarrow$ | $s11 \oplus ra$ | (Schritt 11) |
| s112ra | $\leftarrow$ | $s11ra \oplus s12$ | (Schritt 12) |
| r1ra | $\leftarrow$ | $s112ra \oplus s13$ | (Schritt 13) |
| r1a | $\leftarrow$ | $r1ra \oplus r$ | (Schritt 14) |
| rlr | $\leftarrow$ | $r1ra \oplus a$ | (Schritt 15) |
| s31 | $\leftarrow$ | $r1ra - r1r$ | (Schritt 16) |
| s32 | $\leftarrow$ | $ra - r$ | (Schritt 17) |
| s31a | $\leftarrow$ | $s31 \oplus a$ | (Schritt 18) |
| alpha | $\leftarrow$ | $s31a \oplus s32$ | (Schritt 19) |
| yt | $\leftarrow$ | $y \oplus t$ | (Schritt 20) |
| xry | $\leftarrow$ | $xr \oplus y$ | (Schritt 21) |
| s21 | $\leftarrow$ | $xry - x$ | (Schritt 22) |
| s22 | $\leftarrow$ | $yt - s$ | (Schritt 23) |
| s23 | $\leftarrow$ | $r - y$ | (Schritt 24) |
| s21s | $\leftarrow$ | $s21 \oplus s$ | (Schritt 25) |
| s212s | $\leftarrow$ | $s21s \oplus s22$ | (Schritt 26) |
| r2s | $\leftarrow$ | $s212s \oplus s23$ | (Schritt 27) |
| r2 | $\leftarrow$ | $r2s \oplus s$ | (Schritt 28) |
| r2a | $\leftarrow$ | $r2 - alpha$ | (Schritt 29) |
| xm | $\leftarrow$ | $xr \oplus s$ | (Schritt 30) |

Als Ergebnis erhält man die beiden additiven Masken r1a und r2a sowie eine geänderte maskierte Repräsentation xm des Basiswertes d. Insgesamt gilt:

$$xm = x \oplus r \oplus s = d \oplus (y \oplus r) \oplus (z \oplus s) = d + r1a + r2a$$

Die gerade beschriebene erste Implementierung enthält 29 elementare Operationen. Allerdings unterscheidet sich die eingangsmaskierte Repräsentation x von der ausgangsmaskierten Repräsentation xm. Dies ist für viele Anwendungen akzeptabel. Für Anwendungen, in denen die maskierte Repräsentation durch den Maskierungsübergang nicht verändert werden soll, kann die folgende zweite Implementierung eingesetzt werden. Diese zweite Implementierung führt keine zusätzlichen Zwischenwerte ein und unterscheidet sich hinsichtlich der Benennung der Ein- und Ausgangswerte sowie hinsichtlich der Schritte 1, 2, 4, 10 und 21 von der ersten Implementierung.

Für die zweite beispielhafte Implementierung sind die Eingangswerte xm, yt und z vorgesehen, wobei yt und z boolesche Masken sind und xm eine maskierte Repräsentation des geheim zu haltenden Basiswertes d ist. Somit gilt $xm = d \oplus yt \oplus z$. Es werden dann die folgenden Verfahrensschritte ausgeführt:

| | | | |
|---|---|---|---|
| Wähle zufällige Verschleierungswerte y, s und a | | | (Schritt 1') |
| t | $\leftarrow$ | $yt \oplus y$ | (Schritt 2') |
| zs | $\leftarrow$ | $z \oplus s$ | (Schritt 3') |
| x | $\leftarrow$ | $xm \oplus t$ | (Schritt 4') |
| ztxr | $\leftarrow$ | $zs \oplus x$ | (Schritt 5') |

(fortgesetzt)

| | | | |
|---|---|---|---|
| ztyr | ← | zs ⊕ y | (Schritt 6') |
| s11 | ← | ztxr - x | (Schritt 7') |
| s12 | ← | ztyr - y | (Schritt 8') |
| s13 | ← | s - z | (Schritt 9') |
| r | ← | t ⊕ s | (Schritt 10') |
| ra | ← | r ⊕ a | (Schritt 11') |
| s11ra | ← | s11 ⊕ ra | (Schritt 12') |
| s112ra | ← | s11ra ⊕ s12 | (Schritt 13') |
| r1ra | ← | s112ra ⊕ s13 | (Schritt 14') |
| r1a | ← | r1ra ⊕ r | (Schritt 15') |
| rlr | ← | r1ra ⊕ a | (Schritt 16') |
| s31 | ← | r1ra - r1r | (Schritt 17') |
| s32 | ← | ra - r | (Schritt 18') |
| s31a | ← | s31 ⊕ a | (Schritt 19') |
| alpha | ← | s31a ⊕ s32 | (Schritt 20') |
| xr | ← | x ⊕ r | (Schritt 21') |
| xry | ← | xr ⊕ y | (Schritt 22') |
| s21 | ← | xry - x | (Schritt 23') |
| s22 | ← | yt - s | (Schritt 24') |
| s23 | ← | r - y | (Schritt 25') |
| s21s | ← | s21 ⊕ s | (Schritt 26') |
| s212s | ← | s21s ⊕ s22 | (Schritt 27') |
| r2s | ← | s212s ⊕ s23 | (Schritt 28') |
| r2 | ← | r2s ⊕ s | (Schritt 29') |
| r2a | ← | r2 - alpha | (Schritt 30') |

Als Ergebnis erhält man die beiden additiven Masken r1a und r2a. Die maskierte Repräsentation xm des geheim zu haltenden Basiswertes d bleibt unverändert. Insgesamt gilt:

$$\mathtt{xm} = \mathtt{d} \oplus (\mathtt{y} \oplus \mathtt{r}) \oplus (\mathtt{z} \oplus \mathtt{s}) = \mathtt{d} + \mathtt{r1a} + \mathtt{r2a}$$

Durch numerische Simulation für alle Eingangswerte mit 4 Bit Breite wurde für die beiden gerade beschriebenen Implementierungen nachgewiesen, dass sie gegen Seitenkanalangriffe zweiter Ordnung resistent sind.

Die Korrektheit der obigen ersten Implementierung lässt sich wie folgt veranschaulichen. Gemäß der Beziehung (A2) aus dem ersten Ausführungsbeispiel gilt:

$$r_{1a} = \left( (x \oplus s_2 \oplus z_1 \oplus z_2) - (x \oplus s_1 \oplus s_2 \oplus z_1 \oplus z_2) \right)$$
$$\oplus \left( (s_1 \oplus z_1) - z_1 \right) \oplus \left( (s_1 \oplus z_2) - z_2 \right) \oplus a$$

Mit $z_2 := z$ und $s_1 := z \oplus s = zs$ folgt zunächst:

$$r_{1a} = \left( (x \oplus s_2 \oplus z_1 \oplus z) - (x \oplus s \oplus s_2 \oplus z_1) \right) \oplus \left( (zs \oplus z_1) - z_1 \right) \oplus (s - z) \oplus a$$

Durch die Ersetzung $z_1 := y$ ergibt sich weiter:

$$r_{1a} = \left( (x \oplus s_2 \oplus y \oplus z) - (x \oplus s \oplus s_2 \oplus y) \right) \oplus \left( (zs \oplus y) - y \right) \oplus (s - z) \oplus a$$

Mit $x \oplus s_2 := x \oplus y \oplus s$ und $a := a$ ergibt sich schließlich:

$$r_{1a} = \left( (x \oplus s \oplus z) - x) \right) \oplus \left( (zs \oplus y) - y \right) \oplus (s - z) \oplus a$$

Dies entspricht jedoch genau dem Wert r1a, der als Ergebnis der Schritte (2) - (14) der ersten Implementierung berechnet wurde, denn es gilt:

$$r1a = s11 \oplus s12 \oplus s13 \oplus a$$
$$= \left( (zs \oplus x) - x \right) \oplus \left( (zs \oplus y) - y \right) \oplus (s - z) \oplus a$$

Entsprechend gilt für den Wert $r_2$ gemäß der Beziehung (C2):

$$r_2 = \left( (x \oplus z_4 \oplus z_5) - (x \oplus s_2 \oplus z_4 \oplus z_5) \right) \oplus \left( (s_2 \oplus z_4) - z_4 \right) \oplus \left( (s_2 \oplus z_5) - z_5 \right)$$

Mit $s_2 := y \oplus r = yr$ und $z_5 := y$ erhält man:

$$r_2 = \left( (x \oplus z_4 \oplus y) - ((x \oplus yr) \oplus y \oplus z_4) \right) \oplus \left( (yr \oplus z_4) - z_4 \right) \oplus (r - y)$$

Dann ergibt sich mit $z_4 := s$ schließlich:

$$r_2 = \left( (x \oplus s \oplus y) - ((x \oplus yr) \oplus y \oplus s) \right) \oplus \left( (yr \oplus s) - s \right) \oplus (r - y)$$
$$= \left( (x \oplus r \oplus y) - x \right) \oplus \left( (y \oplus t) - s \right) \oplus (r - y)$$

Dies entspricht jedoch genau dem Wert r2, der gemäß den Schritten (20) - (28) der ersten Implementierung wie folgt berechnet wurde:

$$r2 = s21 \oplus s22 \oplus s23$$
$$= \left( (x \oplus r \oplus y) - x \right) \oplus \left( (y \oplus t) - s \right) \oplus (r - y)$$

Das Verfahren gemäß Fig. 1 und die hier beschriebenen Ausführungsbeispiele, Ausführungsalternativen und Implementierungen sind dazu vorgesehen, von einem Prozessor eines tragbaren Datenträgers, insbesondere einer Chipkarte oder eines Chipmoduls, ausgeführt zu werden. Die Verfahren sind dazu in Form von Programmbefehlen implementiert, die in einem ROM oder einem EEPROM oder einem sonstigen Speicher des Datenträgers enthalten sind.

**Patentansprüche**

1. Verfahren zum ausspähungsgeschützten Übergang von einer booleschen Maskierung eines geheim zu haltenden Wertes (*d*) zu einer additiven Maskierung des geheim zu haltenden Wertes (*d*), wobei der geheim zu haltende Wert (*d*) in der booleschen Maskierung als eine mit einer ersten booleschen Maske ($s_1$) und einer zweiten booleschen Maske ($s_2$) maskierte Repräsentation (*x*) *vorliegt,* und wobei eine erste additive Maske ($r_{1a}$) und eine zweite additive Maske ($r_{2a}$) für den geheim zu haltenden Wert (*d*) bestimmt werden, und wobei

   - ein erster Maskierungsübergang (16) ausgeführt wird, bei dem die erste boolesche Maske ($s_1$) in die erste

additive Maske ($r_{1a}$) umgewandelt wird, wobei die erste additive Maske ($r_{1a}$) eine maskierte Repräsentation einer der ersten booleschen Maske ($s_1$) entsprechenden additiven Maske ($r_1$) ist, die mit einem als boolesche Maske dienenden Verschleierungswert ($a$) maskiert ist,
- ein zweiter Maskierungsübergang (18) ausgeführt wird, bei dem der Verschleierungswert ($a$) in einen additiven Korrekturwert ($\alpha$) umgewandelt wird, und
- ein dritter Maskierungsübergang (20) ausgeführt wird, bei dem die zweite boolesche Maske ($s_2$) in die zweite additive Maske ($r_{2a}$) umgewandelt wird.

2. Verfahren nach Anspruch 1, **dadurch gekennzeichnet, dass** der als boolesche Maske dienende Verschleierungswert ($a$) zufällig bestimmt wird.

3. Verfahren nach Anspruch 1 oder Anspruch 2, **dadurch gekennzeichnet, dass** mindestens zwei weitere zufällige Verschleierungswerte ($z_1$, ...) herangezogen werden, und dass jeder Maskierungsübergang (16, 18, 20) mindestens einen dieser weiteren zufälligen Verschleierungswerte ($z_1$, ...) oder einen davon abgeleiteten Wert verwendet.

4. Verfahren nach Anspruch 1 oder Anspruch 2, **dadurch gekennzeichnet, dass** mindestens zwei weitere zufällige Verschleierungswerte ($z_1$, ...) herangezogen werden, und dass sowohl der erste als auch der dritte Maskierungsübergang (16, 20) jeweils mindestens zwei dieser weiteren zufälligen Verschleierungswerte ($z_1$, ...) oder davon abgeleitete Werte verwenden.

5. Verfahren nach einem der Ansprüche 1 bis 4, **dadurch gekennzeichnet, dass** der erste Maskierungsübergang (16) mit dem geheim zu haltenden Wert ($d$) als Basiswert ausgeführt wird.

6. Verfahren nach einem der Ansprüche 1 bis 5, **dadurch gekennzeichnet, dass** der zweite Maskierungsübergang (18) mit einem Basiswert ausgeführt wird, der sich aus einer der ersten booleschen Maske ($s_1$) entsprechenden additiven Maske ($r_1$) ergibt.

7. Verfahren nach einem der Ansprüche 1 bis 6, **dadurch gekennzeichnet, dass** der dritte Maskierungsübergang (20) mit einem Basiswert ausgeführt wird, der sich durch eine additive Maskierung des geheim zu haltenden Wertes ($d$) mit einer der ersten booleschen Maske ($s_1$) entsprechenden additiven Maske ($r_1$) ergibt.

8. Verfahren nach einem der Ansprüche 1 bis 7, **dadurch gekennzeichnet, dass** der dritte Maskierungsübergang (20) zumindest teilweise vor dem ersten Maskierungsübergang (16) oder zumindest teilweise vor dem zweiten Maskierungsübergang (18) ausgeführt wird.

9. Verfahren nach einem der Ansprüche 1 bis 8, **dadurch gekennzeichnet, dass** die zweite additive Maske ($r_{2a}$) dadurch bestimmt wird, dass der additive Korrekturwert ($\alpha$) in einer additiven Operation auf eine der zweiten booleschen Maske ($s_2$) entsprechende additive Maske ($r_2$) angewendet wird.

10. Verfahren nach einem der Ansprüche 1 bis 8, **dadurch gekennzeichnet, dass** die zweite additive Maske der zweiten booleschen Maske ($s_2$) entspricht, und dass der additive Korrekturwert ($\alpha$) als weiteres Verfahrensergebnis bereitgestellt wird.

11. Verfahren nach einem der Ansprüche 1 bis 10, **dadurch gekennzeichnet, dass** das Verfahren zwischen zwei Abschnitte (12,14) einer kryptographischen Berechnung eingebettet ist, wobei im ersten Abschnitt (12) die maskierte Repräsentation ($x$) durch mindestens eine Operation erzeugt oder verarbeitet wird, die mit der booleschen Maskierung verträglich ist, und im zweiten Abschnitt (14) die maskierte Repräsentation ($x$) durch mindestens eine Operation weiterverarbeitet wird, die mit der arithmetischen Maskierung verträglich ist.

12. Verfahren nach einem der Ansprüche 1 bis 11, **dadurch gekennzeichnet, dass** mindestens einer des ersten, zweiten und dritten Maskierungsübergangs (16, 18, 20) gemäß einem Verfahren ausgeführt wird, das für sich gesehen gegen Seitenkanalangriffe erster Ordnung, nicht aber gegen Seitenkanalangriffe zweiter Ordnung, geschützt ist.

13. Verfahren nach einem der Ansprüche 1 bis 12, **dadurch gekennzeichnet, dass** das Verfahren zum Schutz gegen Seitenkanalangriffe zweiter Ordnung dient.

14. Computerprogrammprodukt mit einer Vielzahl von Programmbefehlen, die mindestens einen Prozessor dazu veranlassen, ein Verfahren nach einem der Ansprüche 1 bis 13 auszuführen.

15. Vorrichtung, insbesondere tragbarer Datenträger oder Chipmodul, mit mindestens einem Prozessor und mindestens einem Speicher, wobei die Vorrichtung dazu eingerichtet ist, ein Verfahren nach einem der Ansprüche 1 bis 13 auszuführen.

**Claims**

1. A method for the transition, so as to be protected against spying out, from a Boolean masking of a value ($d$) to be kept secret to an additive masking of the value ($d$) to be kept secret, wherein the value ($d$) to be kept secret is present in the Boolean masking as a representation ($x$) masked with a first Boolean mask ($s_1$) and a second Boolean mask ($s_2$), and wherein a first additive mask ($r_{1a}$) and a second additive mask ($r_{2a}$) are determined for the value ($d$) to be kept secret, and wherein

   - a first masking transition (16) is executed in which the first Boolean mask ($s_1$) is converted into the first additive mask ($r_{1a}$), wherein the first additive mask ($r_{1a}$) is a masked representation of an additive mask ($r_1$) corresponding to the first Boolean mask ($s_1$), which is masked with an obfuscation value ($a$) serving as Boolean mask,
   - a second masking transition (18) is executed in which the obfuscation value ($a$) is converted into an additive correction value ($\alpha$), and
   - a third masking transition (20) is executed in which the second Boolean mask ($s_2$) is converted into the second additive mask ($r_{2a}$).

2. The method according to claim 1, **characterized in that** the obfuscation value ($a$) serving as a Boolean mask is determined randomly.

3. The method according to claim 1 or claim 2, **characterized in that** at least two further random obfuscation values ($z_1$,...) are used, and **in that** each masking transition (16, 18, 20) employs at least one of these further random obfuscation values ($z_1$,...) or a value derived therefrom.

4. The method according to claim 1 or claim 2, **characterized in that** at least two further random obfuscation values ($z_1$,...) are used, and **in that** both the first and the third masking transition (16, 20) each employ at least two of these further random obfuscation values ($z_1$,...) or values derived therefrom.

5. The method according to any of claims 1 to 4, **characterized in that** the first masking transition (16) is executed with the value ($d$) to be kept secret as the base value.

6. The method according to any of claims 1 to 5, **characterized in that** the second masking transition (18) is executed with a base value which results from an additive mask ($r_1$) corresponding to the first Boolean mask ($s_1$).

7. The method according to any of claims 1 to 6, **characterized in that** the third masking transition (20) is executed with a base value which results from an additive masking of the value ($d$) to be kept secret with an additive mask ($r_1$) corresponding to the first Boolean mask ($s_1$).

8. The method according to any of claims 1 to 7, **characterized in that** the third masking transition (20) is executed at least partially before the first masking transition (16) or at least partially before the second masking transition (18).

9. The method according to any of claims 1 to 8, **characterized in that** the second additive mask ($r_{2a}$) is determined by applying the additive correction value ($a$) in an additive operation to an additive mask ($r_1$) corresponding to the second Boolean mask ($s_2$).

10. The method according to any of claims 1 to 8, **characterized in that** the second additive mask corresponds to the second Boolean mask ($s_2$), and that the additive correction value ($a$) is provided as a further method result.

11. The method according to any of claims 1 to 10, **characterized in that** the method is embedded between two sections (12,14) of a cryptographic calculation, wherein in the first section (12) the masked representation ($x$) is generated or processed by at least one operation which is compatible with the Boolean masking, and in the second section (14) the masked representation ($x$) is further processed by at least one operation which is compatible with the arithmetic masking.

12. The method according to any of claims 1 to 11, **characterized in that** at least one of the first, second and third masking transitions (16, 18, 20) is executed according to a method which seen in itself is protected against first-order side-channel attacks, but not against second-order side-channel attacks.

13. The method according to any of claims 1 to 12, **characterized in that** the method serves for protection against second-order side-channel attacks.

14. A computer program product having a plurality of program commands which prompt at least one processor to execute a method according to any of claims 1 to 13.

15. A device, in particular a portable data carrier or chip module, having at least one processor and at least one memory, wherein the device is devised to execute a method according to any of claims 1 to 13.


## Revendications

1. Procédé de transition, protégée contre l'espionnage, d'un masquage booléen d'une valeur ($d$) à garder secrète à un masquage additif de la valeur ($d$) à garder secrète, cependant que la valeur ($d$) à garder secrète dans le masquage booléen se trouve sous forme d'une représentation ($x$) masquée avec un premier masque booléen ($s_1$) et avec un deuxième masque booléen ($s_2$), et cependant qu'un premier masque additif ($r_{1a}$) et un deuxième masque additif ($r_{2a}$) sont déterminés pour la valeur ($d$) à garder secrète, et cependant que

   - une première transition de masquage (16) est exécutée, lors de laquelle le premier masque booléen ($s_1$) est converti en le premier masque additif ($r_{1a}$), cependant que le premier masque additif ($r_{1a}$) est une représentation masquée d'un masque additif ($r_1$) correspondant au premier masque booléen ($s_1$) qui est masqué avec une valeur d'obfuscation ($a$) servant de masque booléen,
   - une deuxième transition de masquage (18) est exécutée, lors de laquelle la valeur d'obfuscation ($a$) est convertie en une valeur additive de correction ($\alpha$), et
   - une troisième transition de masquage (20) est exécutée, lors de laquelle le deuxième masque booléen ($s_2$) est converti en le deuxième masque additif ($r_{2a}$).

2. Procédé selon la revendication 1, **caractérisé en ce que** la valeur d'obfuscation (a) servant de masque booléen est déterminée aléatoirement.

3. Procédé selon la revendication 1 ou la revendication 2, **caractérisé en ce qu'**au moins deux autres valeurs d'obfuscation aléatoires ($z_1$, ...) sont employées, et que chaque transition de masquage (16, 18, 20) utilise au moins une de ces autres valeurs d'obfuscation aléatoires ($z_1$, ...) ou une valeur en étant dérivée.

4. Procédé selon la revendication 1 ou la revendication 2, **caractérisé en ce qu'**au moins deux autres valeurs d'obfuscation aléatoires ($z_1$, ...) sont employées, et que tant la première que la troisième transition de masquage (16, 20) utilisent respectivement au moins deux de ces autres valeurs d'obfuscation aléatoires ($z_1$, ...) ou des valeurs en étant dérivées.

5. Procédé selon une des revendications de 1 à 4, **caractérisé en ce que** la première transition de masquage (16) est exécutée avec la valeur ($d$) à garder secrète en tant que valeur de base.

6. Procédé selon une des revendications de 1 à 5, **caractérisé en ce que** la deuxième transition de masquage (18) est exécutée avec une valeur de base qui découle d'un masque additif ($r_1$) correspondant au premier masque booléen ($s_1$).

7. Procédé selon une des revendications de 1 à 6, **caractérisé en ce que** la troisième transition de masquage (20) est exécutée avec une valeur de base qui est engendrée par un masquage additif de la valeur ($d$) à garder secrète avec un masque additif ($r_1$) correspondant au premier masque booléen ($s_1$).

8. Procédé selon une des revendications de 1 à 7, **caractérisé en ce que** la troisième transition de masquage (20) est exécutée au moins partiellement avant la première transition de masquage (16) ou au moins partiellement avant la deuxième transition de masquage (18).

9. Procédé selon une des revendications de 1 à 8, **caractérisé en ce que** le deuxième masque additif ($r_{2a}$) est déterminé **en ce que** la valeur additive de correction ($\alpha$) est appliquée dans une opération additive à un masque additif ($r_2$) correspondant au deuxième masque booléen ($s_2$).

10. Procédé selon une des revendications de 1 à 8, **caractérisé en ce que** le deuxième masque additif correspond au deuxième masque booléen ($s_2$) et que la valeur additive de correction ($\alpha$) est mise à disposition en tant qu'autre résultat de procédé.

11. Procédé selon une des revendications de 1 à 10, **caractérisé en ce que** le procédé est intégré entre deux parties (12, 14) d'un calcul cryptographique, cependant que, dans la première partie (12), la représentation ($x$) masquée est générée ou traitée par au moins une opération qui est compatible avec le masquage booléen, et que, dans la deuxième partie (14), la représentation ($x$) masquée est traitée subséquemment par au moins une opération qui est compatible avec le masquage arithmétique.

12. Procédé selon une des revendications de 1 à 11, **caractérisé en ce qu'**au moins une de la première, deuxième et troisième transition de masquage (16, 18, 20) est exécutée suivant un procédé qui, en soi, est protégé contre des attaques de canal latéral de premier ordre, mais pas contre des attaques de canal latéral de second ordre.

13. Procédé selon une des revendications de 1 à 12, **caractérisé en ce que** le procédé sert à la protection contre des attaques de canal latéral de second ordre.

14. Produit programme d'ordinateur ayant une pluralité d'instructions de programme qui amènent au moins un processeur à exécuter un procédé selon une des revendications de 1 à 13.

15. Dispositif, en particulier support de données portable ou module puce, ayant au moins un processeur et au moins une mémoire, cependant que le dispositif est conçu pour exécuter un procédé selon une des revendications de 1 à 13.

MASKIERTE REPRÄSENTATION $x$

ERSTE BOOLESCHE MASKE $s_1$

ZWEITE BOOLESCHE MASKE $s_2$

12

10

WEITERE VERSCHLEIERUNGSWERTE $z_1, \dots$

ERSTER MASKIERUNGS-ÜBERGANG

VER-SCHLEIERUNGS-WERT $a$

16

ZWEITER MASKIERUNGS-ÜBERGANG

18

KORREKTUR-WERT $\alpha$

DRITTER MASKIERUNGS-ÜBERGANG

20

14

ERSTE ADDITIVE MASKE $r_{1a}$

ZWEITE ADDITIVE MASKE $r_{2a}$

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1596527 B1

- WO 02065692 A1

**In der Beschreibung aufgeführte Nicht-Patentliteratur**

- A Sound Method for Switching between Boolean and Arithmetic Masking. **VON L. GOUBIN.** Workshop on Cryptographic Hardware and Embedded Systems 2001 (CHES 2001). Computer Science, Springer-Verlag, 2001, vol. 2162, 3-15

- Efficient and Provably Secure Methods for Switching from Arithmetic to Boolean Masking. **VON BLANDINE DEBRAIZE.** Workshop on Cryptographic Hardware and Embedded Systems 2012 (CHES 2012). Computer Science, Springer-Verlag, 2012, vol. 7428, 107-121
- **VON MICHAEL HUTTER et al.** Constant-Time Higher-Order Boolean-to-Arithmetic Masking. International Association For Cryptologic Research, 22. Dezember 2016, 1-22